# EUROPÄISCHE PATENTANMELDUNG

(11) **EP 4 410 597 A1**
(43) Veröffentlichungstag der Anmeldung: **07.08.2024**
(21) Anmeldenummer: 24152382.8
(22) Anmeldetag: 17.01.2024
(51) Int. Cl.: B60N 2/75

(54) **MITTELKONSOLE FÜR EIN KRAFTFAHRZEUG MIT EINER VERSTELLBAREN ARMAUFLAGE**

(30) Priorität: 02.02.2023 DE 102023200845
(71) Anmelder: VOLKSWAGEN AG, 38440 Wolfsburg (DE)
(72) Erfinder: Kleine, Axel, 38723 Seesen (DE); Frommholz, Dirk, 38518 Gifhorn (DE)

(57) **Zusammenfassung**

Die Erfindung betrifft eine Mittelkonsole (100) für ein Kraftfahrzeug, mit einer verstellbaren Armauflage (120). Die Armauflage (120) ist segmentiert ausgebildet, mit einem höhenverstellbaren ersten Segment (121) sowie einem hinter dem ersten Segment (121) angeordneten und nach hinten neigbaren zweiten Segment (122).

## Beschreibung

Die Erfindung betrifft eine Mittelkonsole für ein Kraftfahrzeug mit einer verstellbaren Armauflage.

Eine betreffende Mittelkonsole ist Bestandteil des Interieurs eines Kraftfahrzeugs und befindet sich auf der von der Fahrertür abgewandten Seite neben dem Fahrersitz. Bei einem Personenkraftwagen kann sich die Mittelkonsole in etwa mittig zwischen den Vordersitzen des Kraftfahrzeugs befinden. Eine Mittelkonsole kann Bedienelemente, Anzeigeeinrichtungen, Ablagen und dergleichen aufweisen. Ferner kann eine Mittelkonsole auch eine Armauflage aufweisen, auf der der Fahrer (oder gegebenenfalls auch der Beifahrer) seinen Arm ablegen kann.

Aus dem Stand der Technik sind Mittelkonsolen mit einer verstellbaren Armauflage bekannt, wie bspw. in der DE 10 2008 050 953 B4, DE 20 2017 101 530 U1 und DE 10 2017 107 157 A1 beschrieben.

Mit der Erfindung soll eine weitere Mittelkonsole mit einer verstellbaren, jedoch ergonomisch verbesserten Armauflage bereitgestellt werden.

Erfindungsgemäß wird eine Mittelkonsole, d. h. eine Fahrzeug-Mittelkonsole, mit den Merkmalen des Patentanspruchs 1 vorgeschlagen. Weitere Merkmale der Erfindung ergeben sich aus den abhängigen Patentansprüchen, der nachfolgenden Erfindungsbeschreibung (dies schließt ausdrücklich auch beispielhaft und optional beschriebene Merkmale ein) und den Figuren.

Die Armauflage der erfindungsgemäßen Mittelkonsole ist segmentiert ausgebildet und weist wenigstens zwei für die Armauflage vorgesehene Segmente auf, nämlich ein erstes Segment und ein dahinter, d. h. hinter dem ersten Segment, angeordnetes zweites Segment, wobei das erste Segment höhenverstellbar und das zweite Segment nach hinten neigbar ist bzw. nach hinten geneigt werden kann. Die erfindungsgemäße Mittelkonsole weist wenigstens eine solche Armauflage auf, die insbesondere für den Fahrer vorgesehen ist.

Erfindungsgemäß weist die zur Mittelkonsole gehörende Armauflage also mehrere Segmente (die auch als Module bezeichnet werden können) auf, die jeweils mit einer für die Arm- und/oder Handauflage vorgesehenen Auflagefläche ausgebildet sind. Wenigstens sind ein erstes Segment und ein zweites Segment vorgesehen. Bezüglich der Vorwärtsfahrtrichtung des Kraftfahrzeugs ist das erste Segment vor dem zweiten Segment angeordnet und das zweite Segment ist hinter dem ersten Segment angeordnet. Die zur Beschreibung der Erfindung verwendeten Begriffe "vorne" und "hinten", einschließlich deren sprachlichen Ableitungen, beziehen sich also auf die Vorwärtsfahrtrichtung des Kraftfahrzeugs. Außerdem ist bevorzugt vorgesehen, dass das zweite Segment unabhängig von seiner Neigung direkt, d. h. lücken- bzw. spaltfrei, am ersten Segment anliegt, insbesondere derart, dass die Auflageflächen ineinander übergehen und quasi eine zusammenhängende Gesamtauflagefläche gebildet wird.

Das erste Segment ist höhenverstellbar, womit gemeint ist, dass für das erste Segment eine Höhen- bzw. Niveauverstellbarkeit vorgesehen ist, sodass dessen Höhelage bzw. das Niveau der Auflagefläche verändert werden kann. Bevorzugt ist eine Höhenverstelleinrichtung oder Ähnliches vorgesehen, die je nach Beschaffenheit eine stufenweise oder stufenlose Höhenverstellung des ersten Segments ermöglicht. Insbesondere ist vorgesehen, dass die Neigung des ersten Segments nicht verändert werden kann bzw. unveränderbar ist. Ferner ist bevorzugt vorgesehen, dass das erste Segment eine im Wesentlichen horizontale Auflagefläche aufweist.

Das zweite Segment ist neigbar, womit gemeint ist, dass für das zweite Segment eine Neigungsverstellbarkeit vorgesehen ist, sodass die Neigung des zweiten Segments bzw. dessen Auflagefläche verändert werden kann. Nachfolgend werden verschiedene Möglichkeiten zur Realisierung einer Neigungsverstellung, insbesondere einer variablen Neigungsverstellung, erläutert, die je nach Ausgestaltung eine stufenweise oder stufenlose Neigungsverstellung des zweiten Segments ermöglichen. Das zweite Segment kann zumindest nach hinten geneigt werden, sodass dessen hinteres Ende, wobei es sich insbesondere um ein freies Ende handelt, tiefer liegt als das dem ersten Segment zugewandte vordere Ende und die Auflagefläche nach vorne ansteigt. Dies ermöglicht, bspw. für Fahrpausen oder auch für das autonome Fahren, eine ergonomische Armablage auf dem zweiten Segment, insbesondere bei zurückgelehntem Oberkörper (Relaxposition).

Eine erste Ausführungsmöglichkeit sieht vor, dass das zweite Segment als Wippe ausgebildet ist, sodass dieses wippenartig nach hinten geneigt und wieder zurückbewegt werden kann. Zur Lagerung des als Wippe ausgebildeten zweiten Segments ist bevorzugt ein Wippenlager vorgesehen, mit dem das zweite Segment insbesondere an der Mittelkonsole bzw. an einer Konsolenstruktur der Mittelkonsole gelagert ist. Bevorzugt ist dieses Wippenlager zwischen dem vorderen Ende und dem hinteren Ende des zweiten Segments angeordnet und befindet sich insbesondere in etwa mittig des zweiten Segments. Ferner kann ein Feder- oder Druckkissensystem, insbesondere ein pneumatisches oder hydraulisches Druckkissensystem, zur Unterstützung der Wippbewegungen vorgesehen sein.

Eine zweite Ausführungsmöglichkeit sieht vor, dass das zweite Segment (an seinem vorderen Ende) mittels Gelenk am ersten Segment befestigt bzw. mit dem ersten Segment verbunden ist, sodass das vordere Ende des zweiten Segments einer Höhenverstellung bzw. einer Höhenverstellbewegung des ersten Segments folgt. D. h., das vordere Ende des zweiten Segments wird vom ersten Segment mitgeführt bzw. mitgeschleppt, wodurch eine Neigungsverstellung erfolgt. Bevorzugt ist das zweite Segment an seinem hinteren Ende mittels Dreh- bzw. Schwenklager gelagert, insbesondere an der Mittelkonsole bzw. an einer Konsolenstruktur der Mittelkonsole. Dieses Dreh- bzw. Schwenklager ist bevorzugt als schwimmendes Lager bzw. Schwimmlager ausgebildet.

Bevorzugt sind das erste Segment und das zweite Segment (bezüglich der Fahrzeuglängsrichtung) mit unterschiedlichen Längen ausgebildet. Vorzugsweise ist vorgesehen, dass das zweite Segment länger ausgebildet ist als das erste Segment und insbesondere wenigstens die doppelte Länge des ersten Segments aufweist. Das erste Segment kann dann als Handauflage und das zweite Segment als Unterarmauflage fungieren.

Die Armauflage kann ein drittes Segment aufweisen, das vor dem ersten Segment angeordnet ist. Das dritte Segment kann starr am ersten Segment befestigt bzw. mit dem ersten Segment verbunden sein. Bevorzugt ist das dritte Segment mittels Gelenk am ersten Segment befestigt, d. h., das erste Segment und das dritte Segment sind über ein Gelenk miteinander verbunden. Je nach Beschaffenheit des Gelenks kann das dritte Segment relativ zum ersten Segment geneigt und/oder seitlich verschwenkt werden.

Die Erfindung wird nachfolgend beispielhaft und in nicht einschränkender Weise mit Bezug auf die Figuren näher erläutert. Die in den Figuren gezeigten und/oder nachfolgend erläuterten Merkmale können, auch unabhängig von konkreten Merkmalskombinationen, allgemeine Merkmale der Erfindung sein und die Erfindung entsprechend weiterbilden.
- Fig. 1: zeigt schematisch in zwei Darstellungen eine erste Ausführungsmöglichkeit einer erfindungsgemäßen Mittelkonsole mit einer verstellbaren Armauflage.
- Fig. 2: zeigt schematisch in zwei Darstellungen eine zweite Ausführungsmöglichkeit einer erfindungsgemäßen Mittelkonsole mit einer verstellbaren Armauflage.

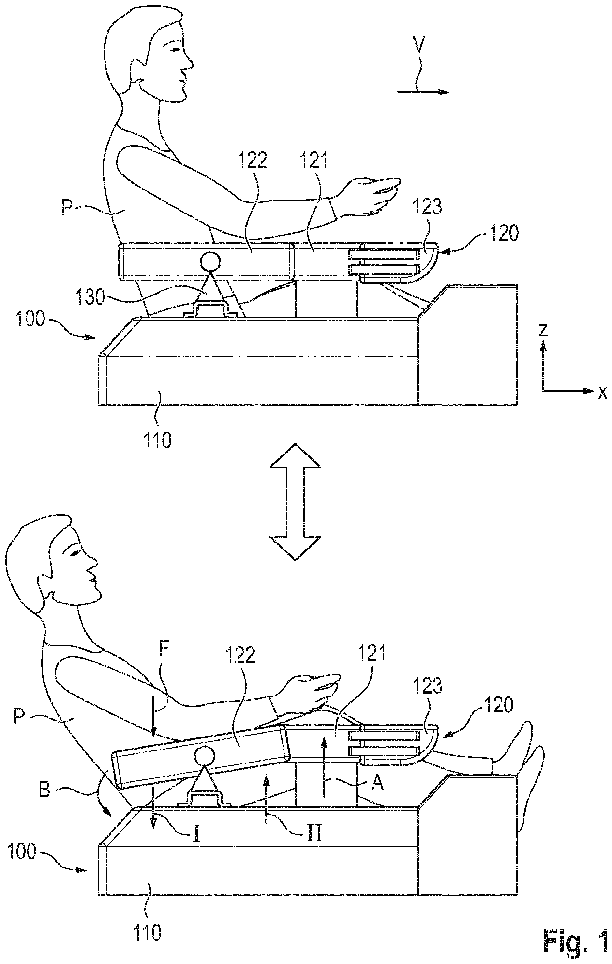

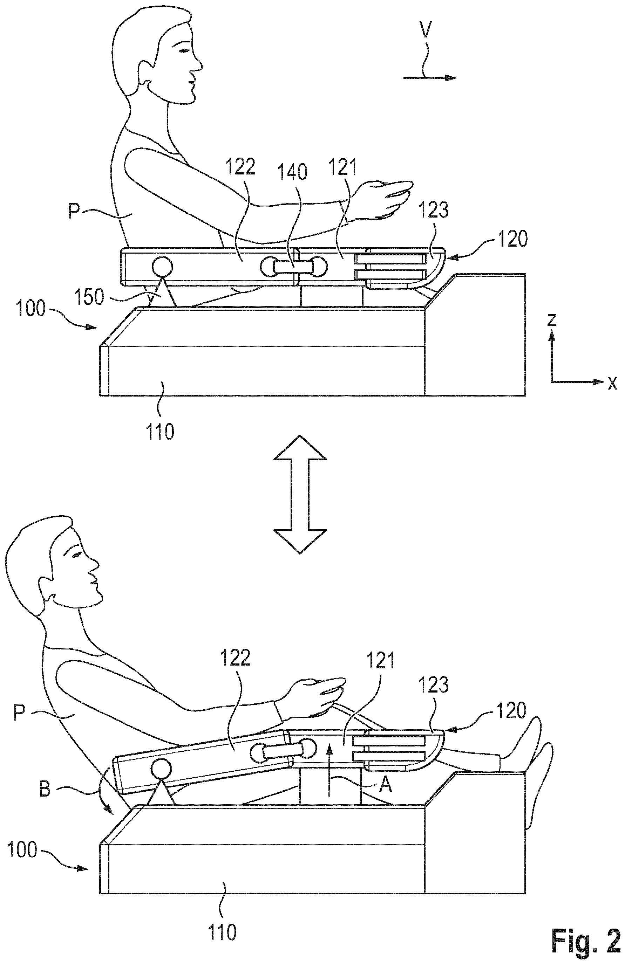

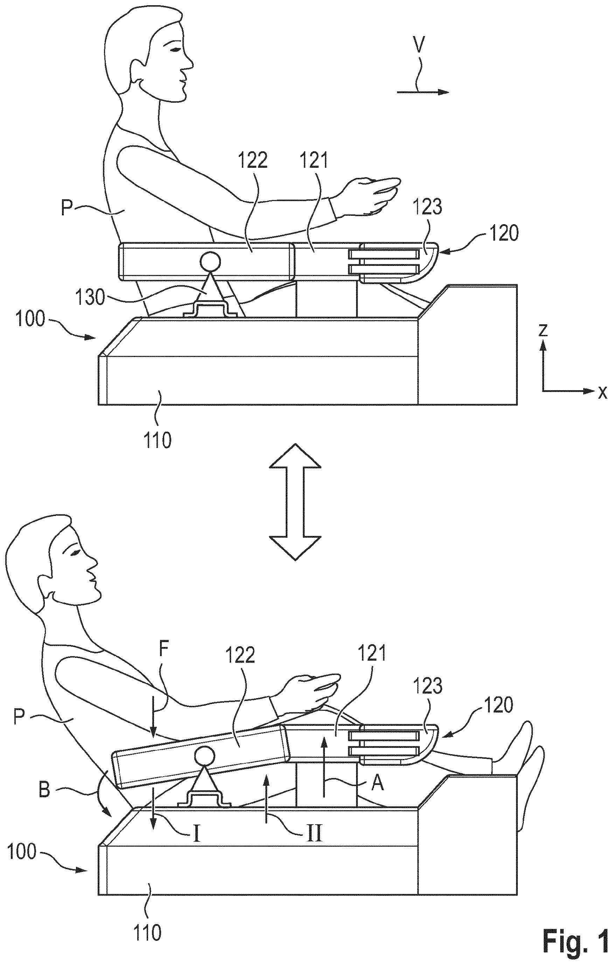

Die Merkmale der in Fig. 1 und Fig. 2 gezeigten Ausführungsmöglichkeiten können im Rahmen der Erfindung zu weiteren Ausführungsmöglichkeiten kombiniert werden. In den Figuren werden für gleiche oder funktionsgleiche Komponenten dieselben Bezugszeichen verwendet.

Die in Fig. 1 gezeigte Mittelkonsole 100 in einem Kraftfahrzeug weist eine verstellbare Armauflage 120 für den Fahrer P auf. Die Armauflage 120 ist segmentiert ausgebildet und umfasst ein erstes (mittleres) Segment 121, ein zweites (hinteres) Segment 122 und ein drittes (vorderes) Segment 123. Bezüglich der Vorwärtsfahrtrichtung V des Kraftfahrzeugs (= x-Richtung) ist das zweite Segment 122 direkt hinter dem ersten Segment 121 und das dritte Segment 123 ist direkt vor dem ersten Segment 121 angeordnet. Das dritte Segment 123 ist am ersten Segment 121 befestigt bzw. mit dem ersten Segment 121 verbunden.

Das erste Segment 121 ist zusammen mit dem dritten Segment 123 in vertikaler Richtung (z-Richtung) höhenverstellbar. Die Mittelkonsole 100 kann hierzu eine in die Konsolenstruktur 110 eingebaute Höhenverstelleinrichtung aufweisen, die manuell, insbesondere mit Federkraftunterstützung oder dergleichen, oder gegebenenfalls auch mittels motorischem Antrieb betätigbar ist. Optional kann vorgesehen sein, dass die gesamte Armauflage 120 um die vertikale Höhenverstellachse drehbar bzw. verschwenkbar ist. Das zweite Segment 122 ist als Wippe ausgebildet und kann nach hinten verkippt bzw. geneigt werden. Das zweite Segment 122 ist hierzu mit einem in etwa mittig angeordneten Wippenlager 130 an der Konsolenstruktur 110 gelagert. Zudem können für das erste Segment 121 und für das zweite Segment 122 Arretiermittel vorgesehen sein, um die eingestellte Position und/oder Ausrichtung zu fixieren.

In der oberen Darstellung befindet sich der Fahrer P in einer Fahrposition. Die Segmente 121, 122, 123 der Armauflage 120 sind waagrecht ausgerichtet und bilden eine zusammenhängende horizontale Gesamtauflagefläche. In der unteren Darstellung befindet sich der Fahrer P in einer Relaxposition mit zurückgelehntem Oberkörper. Das erste Segment 121 und das dritte Segment 123 sind (bezüglich dem Zustand in der oberen Darstellung) nach oben verstellt. Das zweite Segment 122 ist nach hinten geneigt, wodurch eine entspannte ergonomische Armablage möglich ist.

Um die Armauflage 120 aus dem in der oberen Darstellung gezeigten Zustand in den in der unteren Darstellung gezeigten Zustand zu überführen, wird das erste Segment 121, insbesondere stufenlos, nach oben verstellt bis eine gewünschte Höhe bzw. ein gewünschtes Niveau erreicht ist, wie in der unteren Darstellung mit dem Pfeil A angedeutet, und das zweite Segment 122 wird durch manuelles Aufbringen einer vertikalen Stellkraft F (bspw. mittels des Ellenbogens), insbesondere stufenlos, nach hinten geneigt, bis eine gewünschte Neigung erreicht ist, wie in der unteren Darstellung durch den Pfeil B veranschaulicht. Zur Unterstützung der mit den Pfeilen I und II angedeuteten Wippbewegungen kann ein nicht gezeigtes Feder- oder Druckkissensystem, das insbesondere in die Konsolenstruktur 110 eingebaut ist, vorgesehen sein. Die Armauflage 120 kann selbsterklärend in den in der oberen Darstellung gezeigten Zustand zurückgestellt oder auch in einen anderen Zustand überführt werden.

Die Höhenverstellung A und die Neigungsverstellung B erfolgen unabhängig voneinander, d. h., eine Neigungsverstellung B kann prinzipiell auch ohne Höhenverstellung A erfolgen und umgekehrt. Gleichwohl kann auch eine Koppeleinrichtung vorgesehen sein, um die Höhenverstellung A und die Neigungsverstellung B zu koppeln. Eine solche Koppeleinrichtung kann ebenfalls als Feder- oder Druckkissensystem ausgebildet sein, welches insbesondere auch die Wippbewegungen I und/oder II unterstützen kann. Eine Koppeleinrichtung kann auch mittels gesteuerter Stellmotoren realisiert werden.

Bei der in Fig. 2 gezeigten zweiten Ausführungsmöglichkeit ist bei ansonsten gleicher bzw. vergleichbarer Anordnung der Komponenten vorgesehen, dass das zweite Segment 122 an seinem vorderen Ende mittels eines Gelenks 140 am ersten Segment 121 befestigt bzw. mit dem ersten Segment 121 verbunden und in etwa an seinem hinteren Ende mittels eines Schwenklagers 150 an der Konsolenstruktur 110 gelagert ist. Bei der Höhenverstellung des ersten Segments 121, wie in der unteren Darstellung durch den Pfeil A angedeutet, wird das vordere Ende des zweiten Segments 122 mitgeführt bzw. mitgeschleppt, wodurch automatisch eine Neigungsverstellung des zweiten Segments 122 erfolgt, wie durch den Pfeil B angedeutet. Somit ist eine mechanische Kopplung (Schlepp-Kipp-Mechanismus) für die Höhenverstellung A und die Neigungsverstellung B vorgesehen, d. h., eine Neigungsverstellung B kann nur in Verbindung mit einer Höhenverstellung A erfolgen. Die Höhenverstellung A kann insbesondere stufenlos ausgeführt werden. Das Schwenklager 150 kann als Schwimmlager ausgebildet sein, um eine kinematische Überbestimmung zu vermeiden. Im Übrigen gelten sinngemäß die Erläuterungen zu der in Fig. 1 gezeigten Ausführungsmöglichkeit.

### Bezugszeichenliste

- 100: Mittelkonsole
- 110: Konsolenstruktur
- 120: Armauflage
- 121: erstes Segment
- 122: zweites Segment
- 123: drittes Segment
- 130: Wippenlager
- 140: Gelenk
- 150: Schwenklager
- A: Höhenverstellung
- B: Neigungsverstellung
- I/II: Wippenbewegungen
- F: Stellkraft
- P: Fahrer (Person)
- V: Vorwärtsfahrtrichtung
- x/z: Fahrzeugkoordinatensystem

## Patentansprüche

1. Mittelkonsole (100) für ein Kraftfahrzeug, mit einer verstellbaren Armauflage (120),
**dadurch gekennzeichnet, dass**
die Armauflage (120) segmentiert ausgebildet ist und ein höhenverstellbares erstes Segment (121) sowie ein hinter dem ersten Segment (121) angeordnetes und nach hinten neigbares zweites Segment (122) aufweist.

2. Mittelkonsole (100) nach Anspruch 1,
**dadurch gekennzeichnet, dass**
das zweite Segment (122) als Wippe ausgebildet ist.

3. Mittelkonsole (100) nach Anspruch 2,
**dadurch gekennzeichnet, dass**
das zweite Segment (122) mittels eines Wippenlagers (130) gelagert ist.

4. Mittelkonsole (100) nach Anspruch 2 oder 3,
**dadurch gekennzeichnet, dass**
ein Feder- oder Druckkissensystem zur Unterstützung der Wippenbewegungen (I, II) vorhanden ist.

5. Mittelkonsole (100) nach Anspruch 1,
**dadurch gekennzeichnet, dass**
das zweite Segment (122) mittels Gelenk (140) am ersten Segment (121) befestigt ist, sodass das vordere Ende des zweiten Segments (122) einer Höhenverstellung (A) des ersten Segments (121) folgt.

6. Mittelkonsole (100) nach Anspruch 5,
**dadurch gekennzeichnet, dass**
das zweite Segment (122) an seinem hinteren Ende mittels Schwenklager (150) gelagert ist.

7. Mittelkonsole (100) nach einem der vorhergehenden Ansprüche,
**dadurch gekennzeichnet, dass**
das zweite Segment (122) länger ausgebildet ist als das erste Segment (121).

8. Mittelkonsole (100) nach einem der vorhergehenden Ansprüche,
**dadurch gekennzeichnet, dass**
die Armauflage (120) ein drittes Segment (123) aufweist, das vor dem ersten Segment (121) angeordnet ist.

9. Mittelkonsole (100) nach Anspruch 8,
**dadurch gekennzeichnet, dass**
das dritte Segment (123) mittels Gelenk am ersten Segment (121) befestigt ist.
